# EUROPÄISCHE PATENTSCHRIFT

(11) **EP 2 288 916 B1**
(45) Veröffentlichungstag und Bekanntmachung des Hinweises auf die Patenterteilung: **22.04.2015**
(21) Anmeldenummer: 09765237.4
(22) Anmeldetag: 17.06.2009
(51) Int. Cl.: G01N 33/50

(54) **IMMUNOCHROMATOGRAPHISCHES VERFAHREN UND TESTSYSTEM ZUR BESTIMMUNG VON WENIGSTENS EINEM ANALYTEN IN EINER ZU UNTERSUCHENDEN TESTLÖSUNG**
IMMUNOCHROMATOGRAPHIC METHOD AND TEST SYSTEM FOR DETERMINING AT LEAST ONE ANALYTE IN A TEST SOLUTION UNDER EXAMINATION
PROCÉDÉ D'IMMUNOCHROMATOGRAPHIE ET SYSTÈME DE TEST POUR LA DÉTERMINATION D'AU MOINS UN ANALYTE DANS UNE SOLUTION TEST À ANALYSER

(30) Priorität: 17.06.2008 AT 34308 U
(43) Veröffentlichungstag der Anmeldung: 02.03.2011
(73) Patentinhaber: Erber Aktiengesellschaft, 3130 Herzogenburg (AT) (AT)
(72) Erfinder: BAUMGARTNER, Sabine, 3430 TuIIn (AT) (AT); RUDOLF, Judith, 1160 Wien (AT) (AT); BINDER, Eva Maria, 3430 TuIIn (AT) (AT); BINDER Johann, 3430 TuIIn (AT) (AT)
(74) Vertreter: Cunow, Gerda
(86) Internationale Anmeldenummer: PCT/AT2009/000240
(87) Internationale Veröffentlichungsnummer: WO 2009/152543

(56) Entgegenhaltungen:
- EP-A- 0 249 418
- WO-A-03/023371
- WO-A-03/058242
- WO-A-03/087822
- FR-A- 2 881 828
- US-A1- 2007 048 807
- MICHAEL Z ZHENG ET AL: "A Review of Rapid Methods for the Analysis of Mycotoxins" MYCOPATHOLOGIA, KLUWER ACADEMIC PUBLISHERS, DO, Bd. 161, Nr. 5, 1. Mai 2006 (2006-05-01), Seiten 261-273, XP019260009 ISSN: 1573-0832

## Beschreibung

Die vorliegende Erfindung bezieht sich auf ein immunochromatographisches Verfahren zur Bestimmung von wenigstens einem Analyten in einer zu untersuchenden Testlösung, in welchem auf einer auf einem Träger festgelegten immunochromatographischen Membran eine für den Analyten spezifische Testzone aufgetragen wird, wobei auf der Membran gemäß einem immunochromatographischen Trennprinzip getrennt von der spezifischen Testzone für den Analyten eine spezifische Kontrollzone für den Analyten aufgebracht wird und in die zu untersuchende Testlösung ein an eine eine Farbreaktion bewirkende Substanz gekoppelter bzw. damit markierter Antikörper für den zu bestimmenden Analyten eingebracht und reagieren gelassen wird, sowie auf ein Testsystem zur Bestimmung von wenigstens einem Analyten in einer zu untersuchenden Testlösung.

Immunochromatographische Verfahren sowie Testsysteme, in welchen Analyten, insbesondere biologische Analyten nachgewiesen werden können, sind in einer großen Anzahl bekannt, und die meisten dieser Verfahren und Testsysteme sind entweder zeitaufwendig oder erlauben entweder einen qualitativen, einen halb quantitativen oder quantitativen Nachweis einer zu untersuchenden Probe. Insbesondere ist eine Vielzahl von Verfahren und Testsystemen bekannt, bei welchen eine Dünnschichttechnik eingesetzt wird, bei welcher Teststreifen bzw. Testplatten und auf den Testplatten bzw. Teststreifen aufgebrachte, immunochromatographische Membranen mit einem Laufmittel, in welchem die untersuchende Probe zu transportieren ist, in Kontakt gebracht werden, um anschließend entweder durch einen direkten, optischen Vergleich oder mittels Eichkurven einer qualitativen, quantitativen oder auch halb quantitativen Auswertung unterzogen zu werden.

Des Weiteren ist beispielsweise aus der WO 03/058242 ein System mit innerem Kalibrierungssystem für einen Durchflusstest bekannt geworden. Bei diesem System bzw. Verfahren wird eine poröse Membran eingesetzt, welche in Fluidwechselwirkung mit Probenkonjugaten steht, welche ein spezifisches Bindungsglied für eine detektierbare Probe enthalten. Die poröse Membran definiert eine Detektionszone und eine Kalibrierungszone, wobei die Kalibrierungszone zwei oder mehrere Kalibrierungsbereiche beinhaltet, welche unterschiedliche Mengen eines Bindemittels enthalten, welche konfiguriert sind, um sich mit den Probenkonjugaten zu verbinden. Als ein Ergebnis werden Kalibrierungssignale generiert, welche leicht visuell, quantitativ oder dgl. mit einem Detektionssignal verglichen werden können, um die Anwesenheit oder Menge eines Analyten in einer Testprobe zu bestimmen.

Der WO 03/08822 A ist ein Verfahren zur Messung eines interessierenden Analyten in einer Fluidprobe entnehmbar, bei welchem auf einem Teststreifen eine gepufferte Fluidprobe auf einen Startpunkt des Teststreifens aufgebracht wird und nach einem Laufen lassen der Fluidprobe über den mit einer Test- und einer Kontrollzone versehenen Teststreifen die Menge an gebundenen Analytenteilchen ausgelesen wird.

Aus der WO 2007/027231 A1 ist ein Diagnosetestsystem für das genaue Detektieren eines Testanalyten über einen breiten Bereich von möglichen Konzentrationen bekannt geworden.

Ein Merkmal dieses Systems ist, dass es fähig ist anzuzeigen, ob ein Analyt innerhalb des Bereichs einer Überschusskonzentration bzw. des Bereichs des "Hook Effekts" vorhanden ist. Die Analytenkonzentration kann in diesem Fall unter Verwendung von einem Teil einer Dosisantwortkurve bestimmt werden.

Der EP 0 171 150 A2 ist ein Verfahren und eine Vorrichtung zum Untersuchen und Messen von wenigstens einem Analyten in einer einzigen Probe entnehmbar, wobei auf einem festen Träger, der eine Mehrzahl von Rezeptoren daran festgelegt aufweist, unterschiedliche Analyten selektiv an den Rezeptoren gebunden werden, um eine Differentialanalyse zwischen den verschiedenen Analyten durchführen zu können.

Die WO 97/38312 beschreibt eine Diagnosetestvorrichtung, auf welcher auf einer Trägermatrix ein markiertes spezifische Bindungsreagens für den Analyten festgelegt ist, welches markierte, spezifische Bindungsreagens frei innerhalb der Trägermatrix bewegbar ist, wenn sich die Trägermatrix in einem feuchten bzw. nassen Zustand befindet, sowie zusätzlich einen Aufnahmefaden, der ein nicht markiertes spezifisches Bindungsreagens für denselben Analyten aufweist, wobei für den Nachweis des Analyten die Testprobe, die auf die Testvorrichtung aufgebracht wurde, das markierte Bindungsreagens für den Analyten mobilisieren kann, welcher nachfolgend in den Aufnahmefaden permeiert, wobei der an das Reagens gebundene Analyt durch den Aufnahmefaden derart aufgenommen wird, dass die Anwesenheit des Analyten beobachtet werden kann.

Die WO 2003/023371 A beschreibt ein Verfahren zum Hinzufügen einer offensichtlichen Nicht-Signallinie zu einem Schnelldiagnoseverfahren, bei welchem ein Support eine Markierung trägt sowie weiters eine Matrix, die einen axialen Flusspfad definiert, auf dem Support festgelegt ist. Schließlich weist der Support eine Probenaufnahmezone, eine Markierungszone und einen Beobachtungsbereich auf, wobei die Markierung auf dem Support durch ein Beobachtungsfenster detektierbar ist.

Der WO 2000/31539 ist ein Verfahren und eine Vorrichtung zum Durchführen eines lateralen Flussversuchs entnehmbar, wobei auf einem Teststreifen, welcher eine Aufbringzone, auf welchem die Probe aufgebracht werden kann, eine Analytenmeßzone beinhaltend ein Analytenbindungsagens, eine Kontrollzone und eine zweite Messzone beinhaltend ein zweites Kontrollagens eine Untersuchung durchgeführt wird, wobei während dem Betrieb des Teststreifens der Analyt, der auf die Aufbringzone aufgebracht wird, zu der Analytenmeßzone diffundiert und das Kontrollbindungsagens zu den ersten und zweiten Kontrollmesszonen diffundiert.

Schließlich beschreibt die GB 2 300 914 A eine Analytendetektionsvorrichtung für flüssige Proben, in welcher auf einer Membran, entlang welcher sich die Flüssigkeit bewegen kann, eine Mehrzahl von ersten detektierbaren Teilchen, die mit einem Probenbereich der Vorrichtung assoziiert sind, auf welchem Flüssigkeit aufgebracht wird, sich entlang des Supports bewegen, wobei auf dem Support eine erstes Bindungsagens immobilisiert ist, welches einen Komplex mit den Analytenspezies bilden kann. Darüber hinaus sind ein Schwellwertbereich sowie ein Detektionsbereich auf dem Support aufgebracht, um einen Komplex, der zwischen dem ersten Bindungsagens, das auf dem Support immobilisiert ist, und der Analytenspezies ausgebildet wird, zu detektieren. Schließlich ist aus der EP 0 987 551 A2 ein Verfahren zum Bestimmen einer Analytenkonzentration in einem Sandwich-Immunoassay mit lateralem Fluss bekannt geworden, welcher einen Hook Effekt bei hoher Dosis ausübt. In diesem Verfahren wird die Konzentration eines Analyten in einem fluiden Testmedium durch Verwendung eines immunochromatographischen Teststreifens bestimmt, wobei der Teststreifen wenigstens zwei Aufnahmebanden und gegebenenfalls eine oder mehrere Sammelbande(n) aufweist, welche markierte Antianalyten-Antikörper einfangen, um ein detektierbares Signal zur Verfügung zu stellen. Die Signale von der Markierung werden quantitativ in jeder der Banden detektiert, um ein Muster von Signalen zur Verfügung zu stellen, welches für die Konzentration des Analyten in dem Testfluid einzigartig ist. Das Muster der Signale wird in der Folge mathematisch kombiniert, um eine monotone Dosisantwortkurve auszubilden.

Die vorliegende Erfindung zielt nun darauf ab, ein einfaches und insbesondere schnelles Verfahren zur Verfügung zu stellen, mit welchem es möglich ist, die Abwesenheit, die Anwesenheit oder eine Überschusskonzentration eines Analyten, nämlich den Hook Effekt zu bestimmen, ohne dass gleichzeitig komplizierte Rechenverfahren bzw. übermäßig komplizierte, immunochromatographische Membranen zur Verfügung gestellt werden müssen.

Zur Lösung dieser Aufgaben ist das erfindungsgemäße Verfahren im wesentlichen dadurch gekennzeichnet, dass zusätzlich zu der zu untersuchenden Testlösung eine an eine eine Farbreaktion bewirkende Substanz gekoppelte bzw. damit markierte Kontrollsubstanz zugesetzt wird, dass die immunochromatographische Membran 1 bis 20 Minuten in der zu untersuchenden Testlösung eingetaucht wird, dass der Analyt und der überschüssige markierte Antikörper sowie gegebenenfalls das Reaktionsprodukt von Analyt und markiertem Antikörper von der immunochromatographischen Membran aus der Testlösung aufgenommen werden und über die spezifische Testzone und die spezifische Kontrollzone sowie eine nicht spezifische Kontrollzone, enthaltend einen Antikörper für die Kontrollsubstanz laufen gelassen werden, dass zur Auswertung des Verfahrens zuerst die Gültigkeit des Testergebnisses durch Vergleichen der Farbintensität von entweder der bzw. den spezifischen Kontrollzone(n) und/oder der nicht spezifischen Kontrollzone mit einer Farbkarte bestimmt wird und/oder durch die Farbintensität der spezifischen Testzone mittels photometrischen Messgeräten verglichen oder gemessen wird, und dass zur quantitativen Bestimmung des wenigstens einen zu bestimmenden Analyten die Intensität der spezifischen Testzone und jene der spezifischen Kontrollzone photometrisch gemessen werden und mit einer Eichkurve verglichen werden. Indem auf der immunochromatographischen Membran neben einer spezifischen Testzone für den zu bestimmenden Analyten auch eine spezifische Kontrollzone aufgebracht ist bzw. wird, welche auf den zu untersuchenden Analyten exakt abgestimmt ist, gelingt es einfach und ohne komplizierte, mathematische Rechensysteme lediglich durch Zusatz eines mit einer eine Farbreaktion bewirkenden Substanz versetzen bzw. damit markierten Antikörpers für den zu bestimmenden Analyten zu bestimmen, ob der zu untersuchende bzw. zu bestimmende Analyt in der zu untersuchenden Testlösung vorhanden ist.

Indem weiterhin die Laufzeit der zu untersuchenden Testlösung auf der immunochromatographischen Membran zwischen 1 und 20 Minuten gewählt wird, kann einerseits ein langsames und stetiges Laufen der zu untersuchenden Testlösung sichergestellt werden und andererseits können innerhalb kurzer Zeit spezifische und insbesondere sogar quantitative Ergebnisse erhalten werden, wodurch ein rasches und zuverlässiges Verfahren zur Bestimmung von wenigstens einem Analyten in einer zu untersuchenden Testlösung unabhängig von der Konzentration des Analyten in der Testlösung zur Verfügung gestellt werden kann.

Bejahendenfalls, und sofern der zu untersuchende Analyt unterhalb einer für den Analyten definierten Konzentration in der Testlösung enthalten ist, wird eine Nachweislinie in der spezifischen Testzone durch den in der spezifischen Testzone festgelegten Antikörper sowie eine weitere in der spezifischen Kontrollzone, durch die in der spezifischen Kontrollzone festgelegte Substanz und den an eine eine Farbreaktion bewirkende Substanz gekoppelten bzw. damit markierten Antikörper ausgebildet. Im Falle einer Überschusskonzentration des zu untersuchenden Analyten wird weder in der spezifischen Testzone noch in der spezifischen Kontrollzone eine Farbreaktion bewirkt, da sämtliche Bindungsstellen der mit einer eine Farbreaktion bewirkende Substanz gekoppelten Antikörper, sowie die Bindungsstellen des in der spezifischen Testzone festgelegten Antikörpers mit dem zu untersuchenden Analyt belegt sind, wodurch die an die farbgebende Substanz gekoppelten Antikörper in Ermangelung freier Bindungsstellen sowohl über die spezifische Testzone, als auch über die spezifische Kontrollzone hinweg laufen, so dass in diesen Zonen eine Farbreaktion nicht mehr bewirkt werden kann.

Indem das Verfahren so geführt ist, dass zur Auswertung des Verfahrens zuerst die Gültigkeit des Testergebnisses durch Vergleichen der Farbintensität von entweder der spezifischen Kontrollzone und/oder der nicht spezifischen Kontrollzone mit einer Farbkarte bestimmt wird und/oder die Farbintensität der spezifischen Testzone mit einer Farbkarte oder mittels photometrischen Messgeräten verglichen oder gemessen wird, gelingt es, ohne komplizierte und aufwendige Rechenverfahren und insbesondere zuverlässig die Anwesenheit/Abwesenheit und/oder Überschusskonzentration eines Analyten nachzuweisen. Durch eine Überschusskonzentration könnte beispielsweise ein falsches Negativsignal bewirkt werden, obwohl der Analyt in übermäßig großer Menge in der zu untersuchenden Substanz enthalten ist. Durch Vergleich der photometrisch gemessenen Intensitäten der spezifischen Testzone oder der spezifischen Kontrollzone und nachfolgendes Vergleichen mit der Intensität einer Eichkurve gelingt es bei Kenntnis der aufgebrachten Menge des Antikörpers des Analyten auf der immunochromatographischen Membran sowie der an eine eine Farbreaktion bewirkende Substanz gekoppelten bzw. markierten Menge eines Antikörpers, rasch und zuverlässig quantitativ und somit aussagekräftig die Menge des zu untersuchenden Analyten zu bestimmen.

Im Falle einer Überschusskonzentration des zu untersuchenden Analyten, d.h. im Falle des Fehlens einer Farbreaktion sowohl an der spezifischen Testzone als auch der spezifischen Kontrollzone, d.h. bei Vorhandensein eines sogenannten Hook-Effekts, kann bzw. sollte in weiterer Folge die Probe entsprechend verdünnt werden und eine neuerliche Analyse durchgeführt werden, so dass es möglich ist, quantitativ die Menge des in der Probe vorhandenen Analyten zu bestimmen.

Durch Anwendung dieses einfachen Verfahrens gelingt es, unmittelbar lediglich durch optischen Vergleich festzustellen, ob der zu untersuchende Analyt in einer zu untersuchenden Probe vorhanden war, nicht vorhanden war und bzw. ob eine Überschusskonzentration des Analyten in der Probe vorhanden war.

Dadurch, dass zusätzlich zu der zu untersuchenden Testlösung eine an eine eine Farbreaktion bewirkende Substanz gekoppelte bzw. markierte Kontrollsubstanz zugesetzt wird und weiters auf der immunochromatographischen Membran eine nicht spezifische Kontrollzone, enthaltend einen Antikörper für die Kontrollsubstanz aufgebracht ist, gelingt es, eine zusätzlich gefärbte Reaktionszone auf der immunochromatographischen Membran auszubilden, aus welcher unmittelbar ersehen werden kann, ob ein Test gültig ist oder nicht. Dadurch, dass das Laufmittel mit der an eine eine Farbreaktion bewirkende Substanz gekoppelten bzw. damit markierten Kontrollsubstanz bis zur nicht spezifischen Kontrollzone gelaufen ist, kann die Gültigkeit des Tests anhand der in dieser nicht spezifischen Kontrollzone stattfindenden Farbreaktion unmittelbar ohne jede weitere spezifische Auswertung bestimmt werden. In diesem Fall wird eine weitere Vereinfachung der Verfahrensführung erzielt werden, da unmittelbar die Gültigkeit des Versuchs nachgewiesen werden kann.

Um das immunochromatographische Verfahren gemäß der Erfindung insbesondere auch quantitativ führen zu können, ist das Verfahren dahingehend weitergebildet, dass sowohl die Menge des an eine eine Farbreaktion bewirkende Substanz gekoppelten bzw. damit markierten Antikörpers für den Analyten, als auch die Menge des Antikörpers des Analyten, die auf der immunochromatographischen Membran festgelegt wird, quantitativ bestimmt werden. Indem sowohl die Menge des an eine eine Farbreaktion bewirkende Substanz gekoppelten bzw. damit markierten Antikörpers für den Analyten als auch die Menge des Antikörpers des Analyten auf der immunochromatographischen Membran festgelegt sind, kann auch eine quantitative Umsetzung des zu untersuchenden Analyten einfach und ohne großen apparativen oder verfahrenstechnischen Aufwand erzielt werden.

Dadurch, dass in Laufrichtung der Testlösung auf der immunochromatographischen Membran zuerst die spezifische Testzone und nachgeschaltet die spezifische Kontrollzone sowie gegebenenfalls die nicht spezifische Kontrollzone angeordnet wird bzw. werden, wie dies einer weiteren bevorzugten Ausführungsform entspricht, können fehlerhafte Ergebnisse beim Auswerten der immunochromatographischen Membran insbesondere aufgrund eines unregelmäßigen Laufens der zu untersuchenden Testlösung mit Sicherheit hintangehalten werden. Durch die paarweise Anordnung von jeweils einer spezifischen Testzone und einer nachgeschalteten, spezifischen Kontrollzone ist die Wahrscheinlichkeit, dass bei einer positiven Farbreaktion der spezifischen Kontrollzone Fehler in der Membran aufgetreten sind, verschwindend klein.

Gemäß dem erfindungsgemäßen Verfahren ist es, wie dies einer bevorzugten Weiterbildung des Verfahrens entspricht, problemlos möglich, eine Mehrzahl von zu untersuchenden Analyten gleichzeitig zu untersuchen. Hiebei werden jeweils Paare bestehend aus spezifischer Testzone und spezifischer Kontrollzone hintereinander auf der immunochromatographischen Membran aufgebracht sowie gegebenenfalls eine nicht spezifische Kontrollzone in jenem Bereich der immunochromatographischen Membran aufgebracht, welche vom Startpunkt des Laufens der zu untersuchenden Substanz am weitesten entfernt liegt. In diesem Fall kann jeder der zu untersuchenden Analyten gesondert und ohne Beeinflussung durch den bzw. die anderen in einer zu untersuchenden Probelösung vorgelegten Analyten untersucht werden. In weiterer Folge können bei einer derartigen paarweisen Anordnung von spezifischer Test- und Kontrollzone auch in der Membran auftretende Fehler leicht erkannt und entweder die Membranen ausgeschieden werden oder der Versuch unmittelbar wiederholt werden.

Gemäß einem bevorzugten Aspekt der vorliegenden Erfindung ist das erfindungsgemäßen Verfahren dahingehend weitergebildet, dass die an die Mehrzahl von gleichzeitig zu untersuchenden Analyten angepassten Test- und Kontrollzonen auf einer Mehrzahl von nebeneinander gegebenenfalls voneinander trennbar angeordneten Teststreifen angeordnet werden, ist. Mit einer derartigen Ausführung gelingt es insbesondere, eine Vielzahl von Analyten gleichzeitig zu untersuchen oder aber gegebenenfalls einen Teil des Testsystems, welcher als gesonderter Teststreifen ausgebildet ist, von dem Testsystem abzutrennen und einzeln zur Anwendung bzw. Auswertung zu bringen. Dadurch gelingt es nicht nur, eine Vielzahl von Analyten gleichzeitig zu untersuchen, sondern im Bedarfsfall auch die relativ kostenintensiven Testsysteme gezielt und sparsam einzusetzen.

Gemäß einer bevorzugten Weiterbildung des erfindungsgemäßen Verfahrens wird dieses so geführt, dass die immunochromatographische Membran 2 bis 15 Minuten in die zu untersuchende Testlösung eingetaucht wird. Indem die Laufzeit der zu untersuchenden Testlösung auf der immunochromatographischen Membran zwischen 2 und 15 Minuten gewählt wird, kann einerseits ein langsames und stetiges Laufen der zu untersuchenden Testlösung sichergestellt werden und andererseits können innerhalb kurzer Zeit spezifische und insbesondere sogar quantitative Ergebnisse erhalten werden, wodurch ein rasches und zuverlässiges Verfahren zur Bestimmung von wenigstens einem Analyten in einer zu untersuchenden Testlösung unabhängig von der Konzentration des Analyten in der Testlösung zur Verfügung gestellt werden kann.

Weiterhin kann ein Testsystem zur Bestimmung von wenigstens einem Analyten in einer zu untersuchenden Testlösung so ausgebildet sein, dass ein Träger vorgesehen ist, auf welchem sich eine in der Dimension definierte, immunochromatographische Membran befindet, dass auf der immunochromatographischen Membran eine spezifische Testzone, enthaltend insbesondere einen Antikörper für den Analyten, festgelegt ist, dass auf der immunochromatographischen Membran in Abstand von der spezifischen Testzone eine spezifische Kontrollzone, enthaltend den Analyten oder ein Homolog festgelegt ist, dass wenigstens eine nicht spezifische Kontrollzone festgelegt ist und dass ein photometrisches Messgerät zur Bestimmung eines durch die spezifische Testzone gelaufenen Analyten sowie des an eine eine Farbreaktion bewirkende Substanz gekoppelten bzw. damit markierten Antikörpers für den zu bestimmenden Analyten enthalten ist. Durch Vorsehen eines Testsystems zur Bestimmung von wenigstens einem Analyten in einer zu untersuchenden Lösung, bei welchem auf einer immunochromatographischen Membran in spezifischen Testzonen Antikörper für den Analyten oder ein Homolog festgelegt sind und auf der immunochromatographischen Membran zusätzlich und in Abstand von der spezifischen Testzone eine spezifische Kontrolle enthaltend den Analyten festgelegt ist, gelingt es mittels eines an eine eine Farbreaktion bewirkende Substanz gekoppelten bzw. damit markierten Antikörpers für den zu bestimmenden Analyten rasch und zuverlässig eine aussagekräftige Farbreaktion auf der immunochromatographischen Membran zu erhalten, welche in weiterer Folge einfach und ohne komplizierte mathematische Verfahren mittels eines photometrischen Messgeräts auswertbar ist, wodurch rasch und zuverlässig quantitative Messungen eines zu untersuchenden Analyten durchgeführt werden können.

Zur Messung kann hiebei als photometrisches Messgerät ein photometrisches Reflexionsgerät, ein Spektrometer oder eine CCD-Kamera eingesetzt sein. Indem ein photometrisches Messgerät, ein photometrisches Reflexionsgerät, ein Spektrometer oder eine CCD-Kamera eingesetzt ist, können feine Farbunterschiede, insbesondere feine Unterschiede der Farbintensität eindeutig und reproduzierbar nachgewiesen werden und neben den qualitativen Ergebnissen auch eindeutig reproduzierbare, quantitative Ergebnisse betreffend die Menge eines zu untersuchenden Analyten in einer Probe erhalten werden.

Indem zusätzlich auf dem Messgerät eine Anzeige vorgesehen ist, welche das Messergebnis unmittelbar anzeigt, kann das Testsystem für Schnelltests angewandt werden, wodurch rasch und eindeutig, beispielsweise pathogene Substanzen in Nahrungsmitteln, Futtermitteln oder dgl. nachgewiesen werden können.

Indem, wie dies einer Weiterbildung des Testsystems entspricht, das System derart ausgebildet ist, daß auf einer immunochromatographischen Membran eine Mehrzahl von jeweils paarweise nebeneinander oder hintereinander angeordneten, spezifischen Testzonen und spezifischen Kontrollzonen aufgebracht sind, kann gleichzeitig rasch und zuverlässig eine Mehrzahl von zu untersuchenden Analyten auf ein und derselben immunochromatographischen Membran nachgewiesen werden, wodurch insbesondere auch eine Mehrzahl von zu untersuchenden Substanzen, wie beispielsweise Proteine, unerwünschte Inhaltsstoffe bzw. Kontaminanten von agrarischen Produkten, genetisch veränderte Mikroorganismen und dgl., nachgewiesen werden kann, wie dies einer bevorzugten Verwendung der vorliegenden Erfindung entspricht.

Beim Auswerten derartiger Testsysteme kann zur Vereinfachung und um ein präziseres Testergebnis zu erzielen das Testsystem vor Auswertung in die Einzelstreifen getrennt werden, um diese einzeln beispielsweise mit Farbkarten oder dgl. zu vergleichen, so das ei zuverlässiges und präzises Ergebnis erzielt werden kann. In gleicher Weise kann jedoch auch das gesamte Testsystem in einen Testkartenleser eingebracht werden und zur Gänze ausgelesen werden, wodurch das Testsystem nicht nur an eine Vielzahl von Anwendungsmöglichkeiten anpassbar ist, sondern auch rasche und zuverlässige Ergebnisse liefern kann.

Gemäß einer Weiterbindung ist das Testsystem so ausgebildet, dass zwischen den nebeneinander angeordneten Teststreifen Unterbrechungen, insbesondere Schlitze oder Perforierungen, ausgebildet sind, in welchem Fall es möglich ist, den Analyseansprüchen entsprechend entweder den Test für mehrere Analyten gleichzeitig einzusetzen oder, wie bereits ausgeführt, das Testsystem nach Durchführung des Tests in die einzelnen Streifen an den Perforationslinien zu trennen, worauf in weiterer Folge die Einzelstreifen gesondert ausgewertet werden können.

Die Erfindung wird nachfolgend anhand von in der Zeichnung dargestellten Ausführungsbeispielen näher erläutert, in welchen:
Fig. 1a schematisch eine Versuchsanordnung gemäß der vorliegenden Erfindung darstellt, in welcher in Fig. 1a ein valides, allerdings negatives Versuchsergebnis dargestellt ist und Fig. 1b dieselbe Versuchsordnung zeigt, bei welcher jedoch ein valides, negatives Versuchergebnis dargestellt ist;
Fig. 2 eine ähnliche Versuchsanordnung darstellt, bei welcher jedoch zwei verschiedene, zu untersuchende Analyten in der Testlösung enthalten sind und zusätzlich auf der immunochromatographischen Membran eine nicht spezifische Kontrollzone aufgebracht ist, wobei
Fig. 2a einen Versuch darstellt, welcher gültig ist, bei welchem ein erster Analyt ein valides und positives Ergebnis zeigt und ein zweiter zu untersuchender Analyt ein in Verdünnung zu wiederholendes, weil überladenes Ergebnis zeigt;
Fig. 2b einen Fall darstellt, bei welchem der Test gültig ist, aber sowohl der erste Analyt als auch der zweite Analyt ein valides, jedoch negatives Ergebnis zeigen;
Fig. 2c schließlich eine Versuchsanordnung darstellt, in welcher der Test gültig ist und Analyt 1 valid und positiv ist und Analyt 2 valid und negativ ist;
Fig. 3a das Beispiel einer Testkarte zeigt, auf welcher sich zwei Testlinien befinden;
Fig. 3b das Beispiel einer Karte zeigt, auf welcher sich drei Testlinien befinden;
Fig. 4 eine doppelt breit ausgebildete Testkarte darstellt, auf welcher in jedem Teil zwei Analyten nachgewiesen werden können;
Fig. 5a eine Testkarte zeigt, welche in drei Teile unterteilbar ist, auf welchen drei Analyten nebeneinander aufgebracht werden können; und
Fig. 5b eine dreiteilbare Testkarte zeigt, in welcher drei Analyten, welche in einer Matrix vorkommen können, gleichzeitig untersucht werden können.

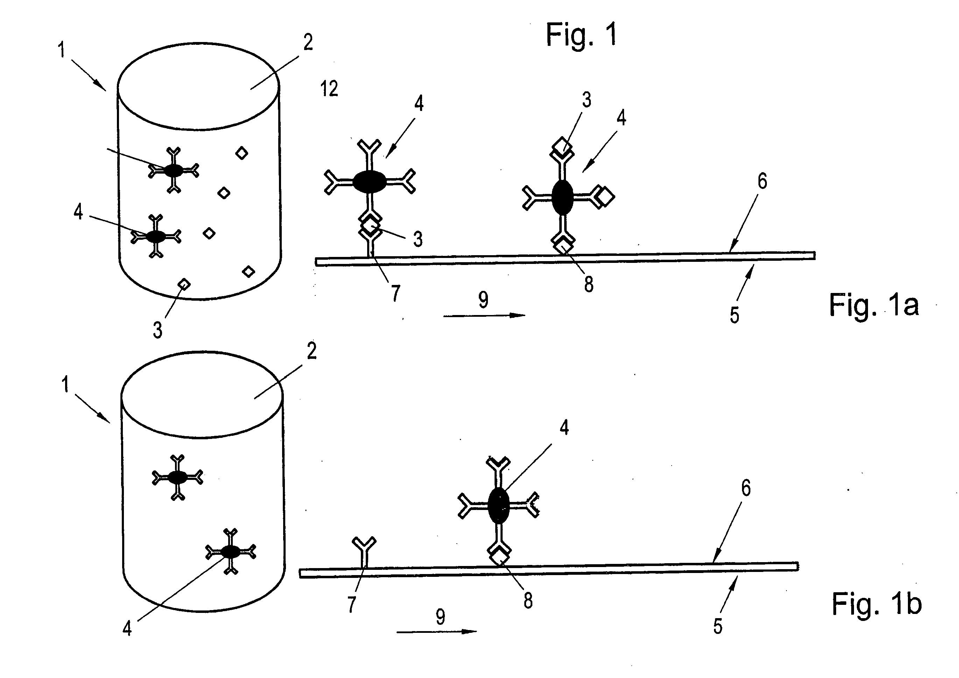

Im Einzelnen ist in Fig. 1 mit 1 schematisch ein Gefäß dargestellt, in welchem eine zu untersuchende Testlösung 2 enthalten ist. In dieser Testlösung 2 ist einerseits mit 3 der zu untersuchende Analyt bezeichnet und andererseits ist mit 4 ein an eine eine Farbreaktion bewirkende Substanz gekoppelter bzw. damit markierter Antikörper bezeichnet. Im Einzelnen sind die in Fig. 1 gewählten Symbole auf dem Gebiet der Biochemie üblich und bedeuten folgendes:
◊ Analyt
Y Antikörper für den Analyt
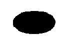 eine eine Farbreaktion bewirkende Substanz an eine eine spezifische Farbreaktion bewirkende
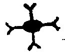 Substanz gekoppelter Antikörper für den Analyten

In das Reaktionsgefäß 1 wird in der Folge ein Teststreifen, welcher schematisch mit 5 bezeichnet ist, eingetaucht, auf welchem eine immunochromatographische Membran 6 aufgebracht ist. Auf der immunochromatographischen Membran 6 ist einerseits ein Antikörper 7 für einen zu untersuchenden Analyten 3 als spezifische Testzone in einer quantitativen Menge festgelegt und es ist andererseits in Abstand von dieser spezifischen Testzone 7 in einer spezifischen Kontrollzone 8 eine quantitative Menge eines in der Probe erwarteten Analyten bzw. dessen Homolog festgelegt.

Wenn die zu untersuchende Lösung 2 in Laufrichtung 9 des Teststreifens 5 läuft, wird in der spezifischen Testzone 7 im Falle eines positiven Nachweises an dem Antikörper für den Analyten einerseits der Analyt 3 und andererseits an dem Analyten 3 der an eine eine Farbreaktion bewirkende Substanz festgelegte Antikörper für den Analyten 4 festgelegt. Beim Weiterlaufen der Testlösung 2 in Laufrichtung 9 wird in weiterer Folge der an eine eine Farbreaktion bewirkende Substanz festgelegte Antikörper für einen Analyten 4, an welchen auch der Analyt 3 festgelegt ist, an der spezifischen Kontrollzone 8, nämlich dem auf der immunochromatographischen Membran 6 festgelegten Analyten festgehalten und eine Farbreaktion bewirken, in welchem Fall bei Auswertung des Teststreifens 5 zwei eine farbige Reaktion zeigende Balken nachgewiesen werden können, welche voneinander räumlich getrennt sind. Aus der Farbintensität kann in weiterer Folge auf die Konzentration des in der Testlösung 2 enthaltenen Analyten 3 geschlossen werden, da einerseits sowohl die Dimension der immunochromatographischen Membran 6 als auch die Menge des aufgebrachten Antikörpers 7 für den Analyten als auch die Menge des aufgebrachten Analyten oder Homologs 8 auf der immunochromatographischen Membran 6 ebenso wie die Menge des an eine eine Farbreaktion bewirkende Substanz festgelegten Antikörpers 4 in der Testlösung 2 bekannt waren, so daß durch einfachen Vergleich mit einer Eichkurve nicht nur die Gültigkeit des Versuchs sondern auch der positive Nachweis des in der Testlösung 2 enthaltenen Analyten 3 geführt werden können.

Fig. 1b stellt den Fall dar, daß in der zu untersuchenden Testlösung 2 der Analyt 3 nicht enthalten ist, sondern lediglich der an eine eine Farbreaktion bewirkende Substanz gekoppelte Antikörper für den Analyten 4 enthalten ist. Wenn in diese Testlösung 2 der Teststreifen 5 eingetaucht wird und entlang der Laufrichtung 9 laufen gelassen wird, wird es an der Stelle 7, wo der Antikörper für den Analyten festgelegt ist, keinerlei Reaktion geben, da kein Analyt in der Probe 2 enthalten war. Darüber hinaus wird es an der Stelle 8, wo der Analyt oder sein Homolog auf der immunochromatographischen Membran 6 festgelegt ist, eine sehr intensive Farbreaktion des an eine eine Farbreaktion bewirkende Substanz gekoppelten Antikörpers für den Analyten 4 geben, so daß unmittelbar auf die Gültigkeit des Versuchs geschlossen werden kann und gleichzeitig festgehalten werden kann, daß der Versuch aufgrund des Fehlens einer Reaktion an der Stelle 7 negativ verlaufen ist.

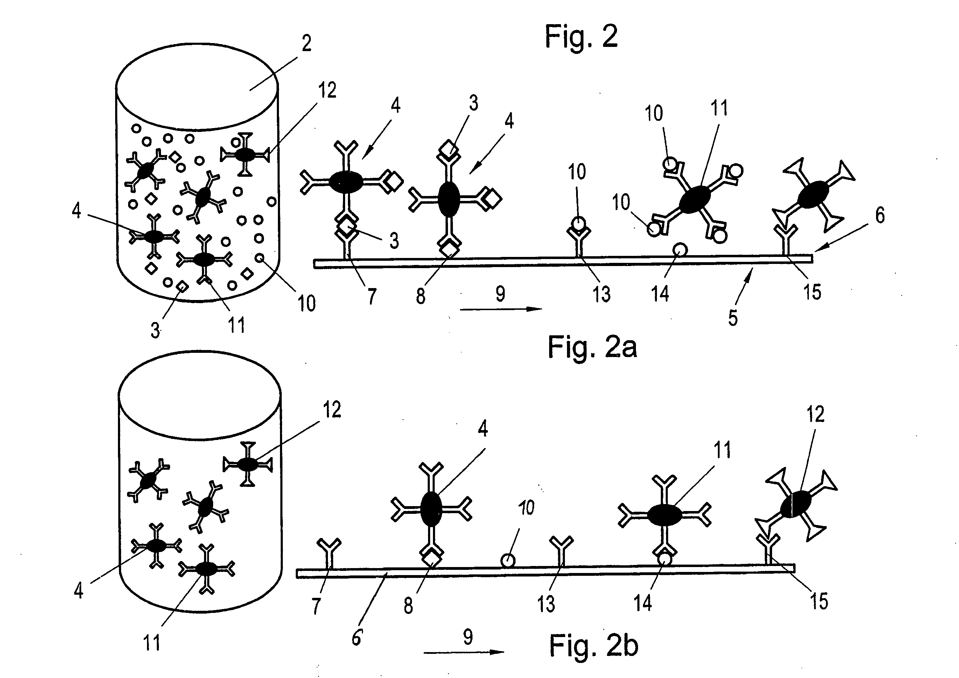

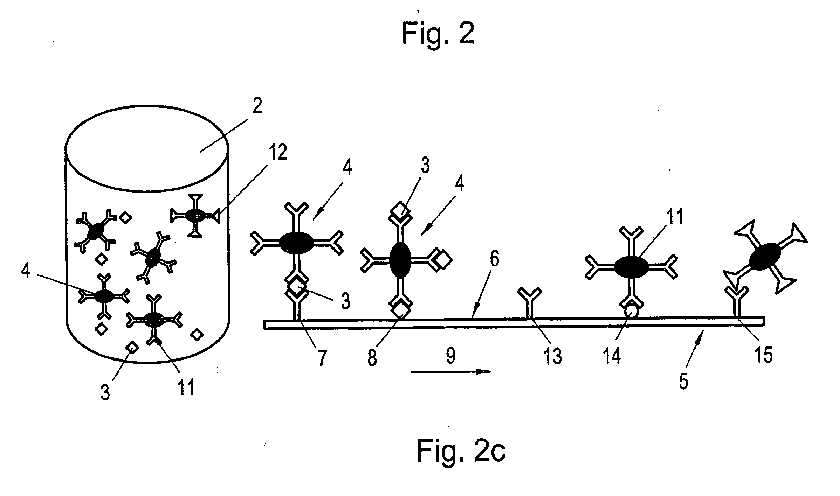

Die Versuchsanordnung gemäß Fig. 2 ist ähnlich zu jener von Fig. 1, wobei jedoch in der Testlösung 2 neben dem Analyten 3 weitere Analyten 10, sowie jeweils ein an eine Farbreaktion bewirkende Substanz festgelegter Antikörper für den Analyten 3 bzw. 10, nämlich 4 bzw. 11 enthalten sind. Schließlich ist in der Testlösung 2 noch eine weitere Substanz 12 enthalten, welche wiederum ein an eine eine Farbreaktion bewirkende Substanz gekoppelter Antikörper 12 ist, wobei jedoch dieser Antikörper nicht spezifisch ist und somit lediglich dafür verwendet wird, um nachzuweisen, ob der Versuch bzw. Test gültig ist oder nicht.

Im Einzelnen sind die in Fig. 2 gewählten Symbole auf dem Gebiet der Biochemie üblich und bedeuten folgendes:
◊ erster Analyt
Y Antikörper für den Analyt
○ zweiter Analyt
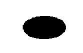 eine eine Farbreaktion bewirkende Substanz
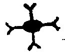 erster an eine eine spezifische Farbreaktion bewirkende Substanz gekoppelter Antikörper für den Analyten
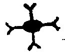 zweiter an eine eine spezifische Farbreaktion bewirkende Substanz gekoppelter Antikörper für den Analyten
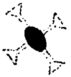 ein an eine eine spezifische Farbreaktion bewirkende Substanz gekoppelter Antikörper einer Kontrollsubstanz

Auf dem Teststreifen 5 sind sowohl in Fig. 2a, 2b als auch 2c hintereinander folgende Substanzen festgelegt: ein Antikörper 7 für den Analyten 3, der Analyt in der spezifischen Kontrollzone 8, ein Antikörper für den Analyten 10, welcher mit 13 bezeichnet ist, ein Analyt 14 in der spezifischen Kontrollzone, sowie ein Antikörper für den nichtspezifischen an eine eine Farbreaktion bewirkende Substanz festgelegten Analyten 12, welcher mit 15 bezeichnet ist. Wenn der Teststreifen 5 in die untersuchende Lösung 2 getaucht wird und entlang der Laufrichtung 9 die zu untersuchende Testlösung läuft, wird im Falle der Fig. 2a sich an den Antikörper 7 der Analyt 3 festlegen, sowie an den Analyten 3 der an eine eine Farbreaktion bewirkende Substanz gekoppelte Antikörper 4 anlagern. An den Analyt bzw. das Homolog 8 wird sich wiederum der an eine eine Farbreaktion bewirkende Substanz angelagerte bzw. gekoppelte Antikörper 4 festlegen, an welchen Antikörper 4 zusätzliche Analytenteilchen 3 gekoppelt sind. Schließlich wird an den Antikörper 13 der Analyt 10 gekoppelt und an dem Analyten 14 wird keine Reaktion stattfinden, da sämtliche Bindungsstellen des an eine eine Farbreaktion bewirkende Substanz gekoppelten Antikörpers 11 durch Analytenteilchen 10 belegt sind, so daß eine Kopplung des an eine eine Farbreaktion bewirkende Substanz gekoppelten Antikörpers 11 und an den Analyten 14 nicht mehr möglich ist. Am Ende in der Laufrichtung 9 auf der immunochromatographischen Membran 6 wird eine Farbreaktion zwischen dem dort festgelegten Antikörper 15 und dem nicht spezifischen Analyten 12 stattfinden, welcher der Probe während des Versuchs zugesetzt wurde, um die Gültigkeit des Versuchs nachweisen zu können.

Der Test gemäß Fig. 2a ist somit in bezug auf den Analyten 3 valide und positiv und der Analyt 3 kann nachgewiesen werden. In bezug auf den Analyten 10 ist er nicht valid, da zuviel des Analyten 10 in der zu untersuchenden Testlösung 2 enthalten ist und somit weder in der spezifischen Testzone noch in der spezifischen Kontrollzone in bezug auf den Analyten 10 eine Farbreaktion beobachtet werden kann. Aus diesem Fehlen der Farbreaktion kann bei Auswertung des Tests auf die Überschußmenge des Analyten geschlossen werden und in weiterer Folge die Testlösung 2 entsprechend verdünnt werden und der Versuch mit einer entsprechend verdünnten Lösung wiederholt werden.

Die Auswertung des Versuches gemäß Fig. 2b zeigt einen gültigen Test, da die nicht spezifische Kontrollsubstanz bzw. der Antikörper 15 für die nicht spezifische Kontrollsubstanz 12 eine Reaktion zeigt, an der spezifischen Testzone, nämlich an dem Antikörper 7 keine Reaktion stattfindet, an der spezifischen Kontrollzone 8 eine Reaktion mit einem an eine eine Farbreaktion bewirkende Substanz gekoppelten Antikörper für den Analyten stattfindet, an der zweiten spezifischen Testzone 13 keine Farbreaktion stattfindet, da auch der zweite, zu untersuchende Analyt 10 in der zu unersuchenden Testlösung 2 nicht enthalten ist, und in einer zweiten, spezifischen Kontrollzone 14 eine Farbreaktion nachgewiesen werden kann, da der an eine eine Farbreaktion bewirkende Substanz gekoppelte Antikörper 11 für den Analyten 10 an den auf der Position 14 festgelegten Analyten 10 gekoppelt hat. Der Test gemäß Fig. 2b ist daher gültig und sowohl in bezug auf den Analyten 3 als auch in bezug auf den Analyten 10 valide, jedoch negativ.

Schließlich zeigt Fig. 2c einen Fall, in welchem der Test, welcher wie oben beschrieben durchgeführt wurde, in bezug auf den Analyten 3 valide und positiv ist, und in bezug auf den Analyten 10 valide und negativ ist, da dieser in der untersuchenden Lösung 2 nicht enthalten ist. Selbstverständlich können neben den Varianten mit ein und zwei zu untersuchenden Analyten auch beispielsweise fünf oder mehr Analyten in der zu untersuchenden Probe enthalten sein und, wie bereits ausgeführt, kann die Auswertung des Versuchsergebnisses sowohl optisch durch rein visuelle Auswertung der Farbintensitäten der erhaltenen Reaktionsbalken durchgeführt werden, als auch mittels entsprechender Meßgeräte und durch Vergleichen mit Eichkurven, beispielsweise quantitativ durchgeführt werden.

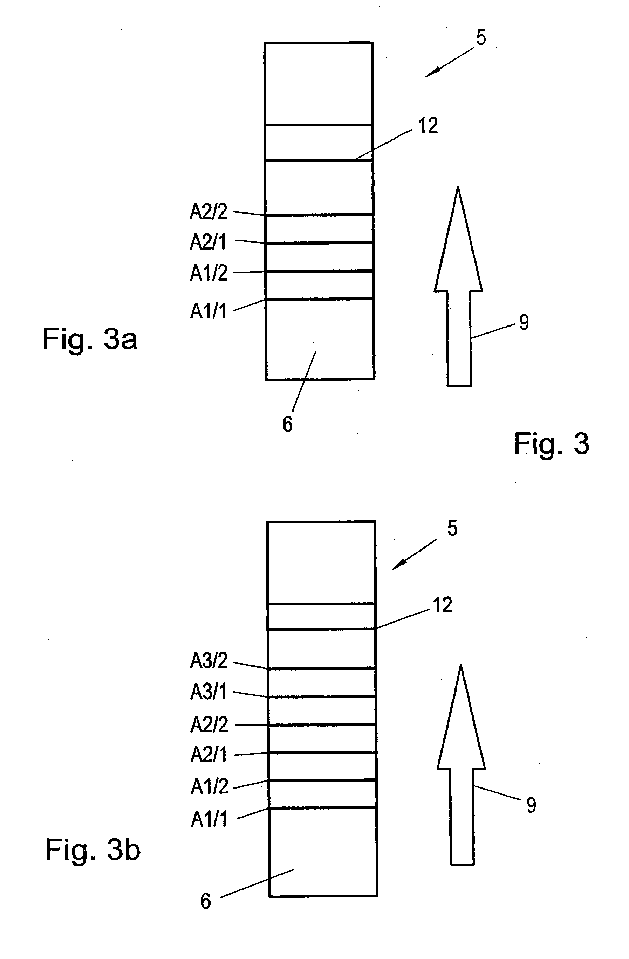

Fig. 3a zeigt einen Teststreifen, auf welchen eine immunochromatographische Membran 6 aufgebracht ist. In Laufrichtung 9 der Membran, welche mit einem Pfeil angedeutet ist, sind hintereinander zwei Testlinien für zu untersuchende Analyten A1/1 und A2/1 aufgebracht, mit welchen beispielsweise alpha-Laktalbumin (Analyt A1) und Kasein (Analyt A2) nachgewiesen werden kann.

In Abstand von den zwei Testlinien A1/1 und A2/1 sind die entsprechenden spezifischen Kontrollinien A1/1 und A2/2 aufgebracht. Am Ende des Teststreifens 5 ist die nicht spezifische Kontrollzone 12 aufgebracht.

In gleicher Weise zeigt Fig. 3b eine Testkarte 5, in welcher in Flußrichtung 9 drei Paare von Analyten samt spezifischer Kontrollinie hintereinander aufgebracht sind. So zeigt beispielsweise A1/1 den zu untersuchenden Analyten, beispielsweise alpha-Laktalbumin, die Linie A1/2 zugehörige, spezifische Kontrollinien, die Linie A2/1 einen zweiten zu untersuchenden Analyten, wie beispielsweise Kasein, die Linie A2/2 die zugehörige, spezifische Kontrollinie und die Linie A3/1 einen dritten zu untersuchenden Analyten, wie beispielsweise beta-Laktoglobulin, und die Linie A3/2 die zugehörige, spezifische Kontrollinie. Mit 12 ist wiederum die nicht spezifische Kontrollinie dargestellt.

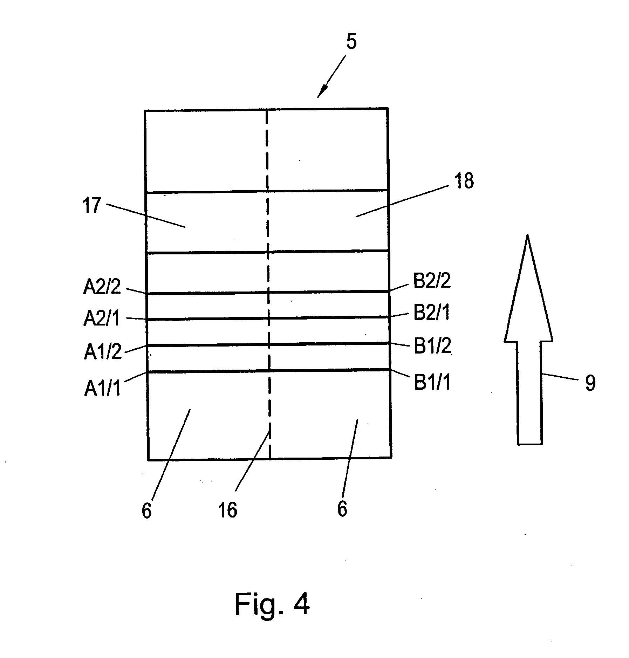

Fig. 4 zeigt wiederum eine Testkarte 5, welche jedoch abweichend von den vorhergehenden Ausbildungen zweiteilig ausgebildet ist. Die Testkarte 5 ist hiebei in der Mitte entlang einer Perforationslinie 16 in zwei Teile 17 und 18 trennbar. Auf den zwei Teilen der Testkarte können nun jeweils zwei Analytenpaare aufgetragen werden, so daß mit ein und derselben Testkarte 5 insgesamt vier Analyten gleichzeitig untersucht werden können. Aufgrund einer derartigen Ausbildung können entweder alle vier Analyten gleichzeitig qualitativ ausgewertet werden oder nach Bedarf jeweils nur die beiden auf einem Streifen bzw. Teil 17 bzw. 18 der Testkarte 5 befindlichen Analyten. Je nach Verfügbarkeit der zur Verfügung stehenden Auswerteeinrichtungen kann weiterhin das Verfahren so geführt werden, daß auch eine quantitative Auswertung aller vier Analyten in einem entsprechenden Lesegerät gleichzeitig durchgeführt werden kann oder nach Trennung des Teststreifens 5 in die Teile 17 bzw. 18, welche jeweils eine immunochromatographische Membran 6 tragen, diese gesondert ausgewertet werden.

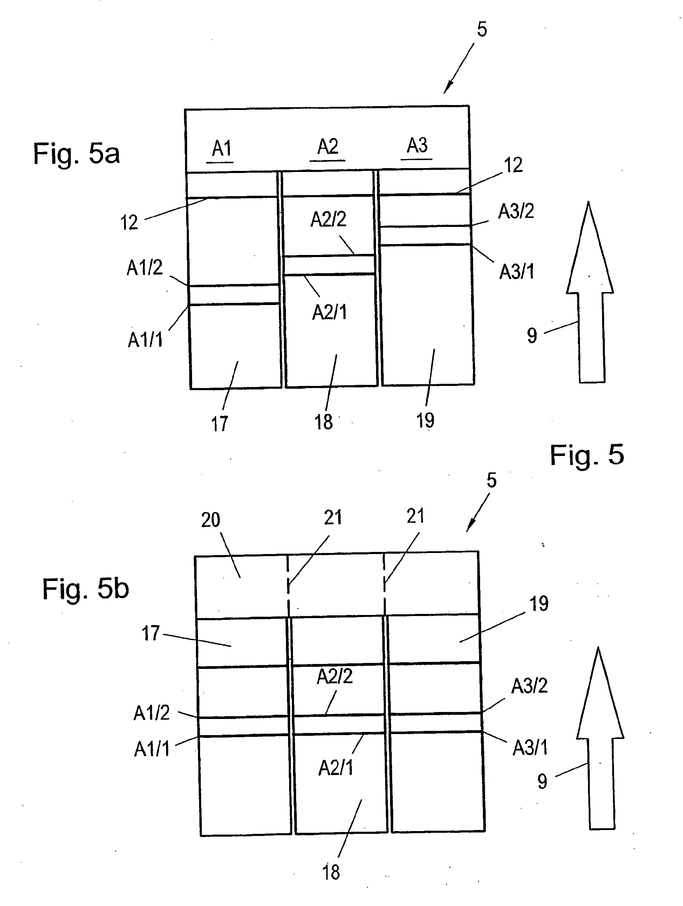

In gleicher Weise kann, wie dies in Fig. 5a und 5b dargestellt ist, die Testkarte auch aus mehreren Teilen, beispielsweise drei, wie in Fig. 5a und 5b dargestellt, ausgebildet sein. Die Testkarte 5 umfaßt in diesem Fall drei Teile 17, 18 und 19, wobei auf jedem Teil der Testkarte 5 jeweils ein Analyt sowie die zugehörige, spezifische Kontrollinie, nämlich A1/1 bzw. A1/2, A2/1 bzw. A2/2 und A3/1 bzw. A3/2, aufgetragen sind.

Zur besseren Lesbarkeit ist in Fig. 5a hiebei jeweils die spezifische Test- und Kontrollinie in Abstand voneinander auf den Einzelkarten 17, 18 und 19 aufgebracht, so daß mit einem derartigen System nicht nur eine vereinfachte Lesbarkeit des Tests erreicht werden kann, sondern auch eine bessere Übersichtlichkeit erzielt wird. Zur Vervollständigung des Tests ist in allen drei Teilkarten 17, 18, 19 des Teststreifens 5 jeweils eine nicht spezifische Kontrollinie 12 aufgebracht.

In diesem Fall ist es beispielsweise möglich, nach einem positiven Ergebnis auf einem der Streifen eine weitere Analyse mit einem weiteren Streifen durchzuführen, um ein verfeinertes Ergebnis zu erhalten.

Fig. 5b zeigt wiederum eine Testkarte 5, in welcher drei voneinander verschiedene Analyten untersucht werden können, wobei die Ausbildung gemäß Fig. 5b insbesondere für die Untersuchung von Analyten, welche in einer Matrix vorkommen, geeignet ist, beispielsweise kann hier Milch angeführt werden, in welcher verschiedene allergene Komponenten, wie alpha-Laktalbumin, Kasein oder beta-Laktalbumin, enthalten sein können. Die Testkarte 5 ist hiebei wiederum in drei Teile 17, 18 und 19 unterteilt und in Laufrichtung 9 des Flußmittels sind sämtliche, spezifischen Test- und Kontrollinien auf selber Höhe ebenso wie eine nicht spezifische Kontrollinie 12 aufgebracht. Die Testkarte 5 gemäß Fig. 5b ist im Unterschied zu jener von Fig. 5a dahingehend weitergebildet, daß lediglich eine Perforierung 21 im oberen Teil, insbesondere im Griffbereich 20, der Testkarte vorgesehen ist, so daß die Streifen leicht voneinander abgerissen werden können. Die Teststreifen 17, 18 und 19 sind im unteren Bereich, d.h. im Bereich, wo der Test durchgeführt wird, vollständig voneinander getrennt ausgebildet und weisen keine Perforierungen auf.

Bei einer derartigen Ausbildung können insbesondere einzelne Streifen 17, 18 oder 19 von der Testkarte 5 ohne Beschädigung des Versuchs sicher und zuverlässig abgetrennt werden.

Selbstverständlich kann das System dahingehend weitergebildet sein, daß auf der Testkarte 5 lediglich ein einziger Analyt in verschiedenen Bereichen 17, 18 oder 19 der Testkarte detektiert wird, wobei beispielsweise in den einzelnen Streifen der Testkarte 5 unterschiedliche Konzentrationen von ein und demselben Analyten aufgebracht werden, um unmittelbar ein quantitatives, sicheres und zuverlässiges Ergebnis zu erzielen.

## Patentansprüche

1. Immunochromatographisches Verfahren zur Bestimmung von wenigstens einem Analyten in einer zu untersuchenden Testlösung, in welchem auf einer auf einem Träger festgelegten immunochromatographischen Membran eine für den Analyten spezifische Testzone aufgetragen wird, wobei auf der Membran (6) gemäß einem immunochromatographischen Trennprinzip getrennt von der spezifischen Testzone (7, 13) für den Analyten (3, 10) eine spezifische Kontrollzone (8, 14) für den Analyten aufgebracht wird und in die zu untersuchende Testlösung (2) ein an eine eine Farbreaktion bewirkende Substanz gekoppelter bzw. damit markierter Antikörper (4, 11) für den zu bestimmenden Analyten (3, 10) eingebracht und reagieren gelassen wird, **dadurch gekennzeichnet, dass** zusätzlich zu der zu untersuchenden Testlösung (2) eine an eine eine Farbreaktion bewirkende Substanz gekoppelte bzw. damit markierte Kontrollsubstanz (12) zugesetzt wird, dass die immunochromatographische Membran (6) 1 bis 20 Minuten in der zu untersuchenden Testlösung eingetaucht wird, dass der Analyt (3, 10) und der überschüssige markierte Antikörper (4, 11) sowie gegebenenfalls das Reaktionsprodukt von Analyt und markiertem Antikörper von der immunochromatographischen Membran (6) aus der Testlösung (2) aufgenommen werden und über die spezifische Testzone (7, 13) und die spezifische Kontrollzone (8, 14) sowie eine nicht spezifische Kontrollzone (15), enthaltend einen Antikörper für die Kontrollsubstanz (12) laufen gelassen werden, dass zur Auswertung des Verfahrens zuerst die Gültigkeit des Testergebnisses durch Vergleichen der Farbintensität von entweder der bzw. den spezifischen Kontrollzone (8, 14) und/oder der nicht spezifischen Kontrollzone (15) mit einer Farbkarte bestimmt wird und/oder durch die Farbintensität der spezifischen Testzone mittels photometrischen Messgeräten verglichen oder gemessen wird, und dass zur quantitativen Bestimmung des wenigstens einen zu bestimmenden Analyten (3, 10) die Intensität der spezifischen Testzone (7, 14) und jene der spezifischen Kontrollzone (8, 14) photometrisch gemessen werden und mit einer Eichkurve verglichen werden.

2. Immunochromatographisches Verfahren nach Anspruch 1, **dadurch gekennzeichnet, dass** sowohl die Menge des an eine eine Farbreaktion bewirkende Substanz gekoppelten bzw. damit markierten Antikörpers (4, 11) für den Analyten (3, 10), als auch die Menge des Antikörpers des Analyten, die auf der immunochromatographischen Membran (6) festgelegt wird, quantitativ bestimmt werden.

3. Immunochromatographisches Verfahren nach Anspruch 1 oder 2, **dadurch gekennzeichnet, dass** in Laufrichtung (9) der Testlösung (2) auf der immunochromatographischen Membran (6) zuerst die spezifische Testzone (7, 13) und nachgeschaltet die spezifische Kontrollzone (8, 14) sowie gegebenenfalls die nicht spezifische Kontrollzone (15) angeordnet wird bzw. werden.

4. Immunochromatographisches Verfahren nach Anspruch 1, 2 oder 3, **dadurch gekennzeichnet, dass** eine Mehrzahl von zu untersuchenden Analyten (3, 10) gleichzeitig untersucht wird.

5. Immunochromatographisches Verfahren nach Anspruch 4, **dadurch gekennzeichnet, dass** bei gleichzeitiger Untersuchung einer Mehrzahl von zu untersuchenden Analyten (3, 10) an die zu untersuchenden Analyten (3, 10) angepassten spezifischen Test- (7, 13) und Kontrollzonen (8, 14) jeweils paarweise hintereinander oder nebeneinander auf einer immunochromatographischen Membran angeordnet werden.

6. Immunochromatographisches Verfahren nach Anspruch 4 oder 5, **dadurch gekennzeichnet, dass** die an die Mehrzahl von gleichzeitig zu untersuchenden Analyten (3, 10) angepassten Test- (7, 13) und Kontrollzonen (8, 14) auf einer Mehrzahl von nebeneinander gegebenenfalls voneinander trennbar angeordneten Teststreifen angeordnet werden.

7. Immunochromatographisches Verfahren nach einem der Ansprüche 1 bis 6, **dadurch gekennzeichnet, dass** die immunochromatographische Membran (6) 2 bis 15 Minuten in der zu untersuchenden Testlösung (2) eingetaucht wird.

## Claims

1. An immunochromatographic method for detecting at least one analyte in a test solution to be assayed, in which a test zone that is specific for the analyte is applied on an immunochromatographic membrane fixed to a support, wherein a specific control zone (8, 14) for the analyte is applied on the membrane (6) separately from the specific test zone (7, 13) for the analyte (3, 10) according to an immunochromatographic separation principle, and an antibody (4, 11) for the analyte (3, 10) to be detected, which is coupled to, and hence labeled with, a substance causing a color reaction is introduced into the test solution (2) to be assayed and allowed to react, **characterized in that**, in addition to the test solution (2) to be assayed, a control substance (12) coupled to, and hence labeled with, a color-reaction-causing substance is admixed, that the immunochromatographic membrane (6) is immersed for 1 to 20 minutes in the test solution to be assayed, that the analyte (3, 10) and excess labeled antibody (4, 11) and optionally the reaction product of analyte and labeled antibody are taken up from the test solution (2) by the immunochromatographic membrane (6) and allowed to run over the specific test zone (7, 13) and the specific control zone (8, 14) as well as a non-specific control zone (15) containing an antibody for the control substance (12), that, for evaluating the method, at first the validity of the test result is determined by comparing the color intensity of the specific control zone(s) (8, 14) and/or the non-specific control zone (15) with a color card, and/or compared or measured by the color intensity of the specific test zone using photometric measuring devices, and that, for quantitatively assessing the at least one analyte (3, 10) to be detected, the intensity of the specific test zone (7, 14) and that of the specific control zone (8, 14) are photometrically measured and compared to a calibration curve.

2. An immunochromatographic method according to claim 1, **characterized in that** both the amount of the antibody (4, 11) coupled to, and hence labeled with, a color-reaction-causing substance, for the analyte (3, 10) and the amount of the antibody of the analyte, which is fixed to the immunochromatographic membrane (6), are quantitatively assessed.

3. An immunochromatographic method according to claim 1 or 2, **characterized in that**, at first, the specific test zone (7, 13) and, downstream, the specific control zone (8, 14) as well as optionally the non-specific control zone (15) are arranged on the immunochromatographic membrane (6), viewed in the running direction (9) of the test solution (2).

4. An immunochromatographic method according to claim 1, 2 or 3, **characterized in that** a plurality of analytes (3, 10) to be assayed are assayed simultaneously.

5. An immunochromatographic method according to claim 4, **characterized in that**, when simultaneously assaying a plurality of analytes (3, 10) to be assayed, specific test (7, 13) and control (8, 14) zones adapted to the analytes (3, 10) to be assayed are each pairwisely arranged on an immunochromatographic membrane, either one after the other or side by side.

6. An immunochromatographic method according to claim 4 or 5, **characterized in that** the test (7, 13) and control (8, 14) zones adapted to the plurality of analytes (3, 10) to be assayed simultaneously are arranged on a plurality of test strips located side by side, optionally in a mutually separable manner.

7. An immunochromatographic method according to any one of claims 1 to 6, **characterized in that** the immunochromatographic membrane (6) is immersed for 2 to 15 minutes in the test solution (2) to be assayed.

## Revendications

1. Procédé immunochromatographique pour la détermination d'au moins un analyte dans une solution test à analyser, dans lequel, sur une membrane immunochromatographique fixée sur un support, une zone de test spécifique de l'analyte est appliquée, où sur la membrane (6) est séparée de la zone de test spécifique (7, 13) pour l'analyte (3, 10), selon un principe de séparation immunochromatographique, une zone témoin spécifique (8, 14) pour l'analyte et dans la solution test à analyser (2), on introduit et on fait réagir un anticorps (4, 11) couplé à une substance entraînant une réaction colorée ou marqué avec celle-ci pour l'analyte (3, 10) à déterminer, **caractérisé en ce que**, en plus de la solution test (2) à analyser, on ajoute une substance témoin (12) couplée à une substance entraînant une réaction colorée ou marquée avec celle-ci, **en ce que** la membrane immunochromatographique (6) est immergée 1 à 20 minutes dans la solution test à analyser, **en ce que** l'analyte (3, 10) et l'anticorps marqué excédentaire (4, 11) et éventuellement le produit réactionnel de l'analyte et de l'anticorps marqué sont absorbés par la membrane immunochromatographique (6) de la solution test (2) et on les laisse s'écouler sur la zone de test spécifique (7, 13) et la zone témoin spécifique (8, 14) et une zone témoin non spécifique (15) contenant un anticorps pour la substance témoin (12), **en ce que**, pour l'analyse du procédé, tout d'abord la validité du résultat de test est déterminée par comparaison de l'intensité colorée de la ou des zone témoin spécifique (8, 14) et/ou zone témoin non spécifique (15) avec une carte de couleurs et/ou est comparée ou mesurée par l'intensité colorée de la zone de test spécifique au moyen d'un appareil de mesure photométrique, et **en ce que**, pour la détermination quantitative de l'au moins un analyte (3, 10) à déterminer, l'intensité de la zone de test spécifique (7, 14) et chacune des zones témoins spécifiques (8, 14) sont mesurées de façon photométrique et comparées à une courbe d'étalonnage.

2. Procédé immunochromatographique selon la revendication 1, **caractérisé en ce qu'**aussi bien la quantité d'anticorps (4, 11) couplé à une substance entraînant une réaction colorée ou marqué avec celle-ci pour l'analyte (3, 10) que la quantité d'anticorps de l'analyte qui est fixé sur la membrane immunochromatographique (6) sont déterminées quantitativement.

3. Procédé immunochromatographique selon la revendication 1 ou 2, **caractérisé en ce que**, dans le sens d'écoulement (9) de la solution test (2) sur la membrane immunochromatographique (6), est ou sont disposées tout d'abord la zone de test spécifique (7, 13) et ensuite la zone témoin spécifique (8, 14) et éventuellement la zone témoin non spécifique (15).

4. Procédé immunochromatographique selon la revendication 1, 2 ou 3, **caractérisé en ce qu'**une majorité d'analytes (3, 10) à analyser est analysée en même temps.

5. Procédé immunochromatographique selon la revendication 4, **caractérisé en ce que**, lors de l'analyse concomitante d'une majorité des analytes (3, 10) à analyser, des zones de test (7, 13) et témoins (8, 14) spécifiques adaptées aux analytes (3, 10) à analyser sont disposées respectivement, par paire, consécutivement ou parallèlement sur une membrane immunochromatographique.

6. Procédé immunochromatographique selon la revendication 4 ou 5, **caractérisé en ce que** les zones de test (7, 13) et zones témoins (8, 14) adaptées à la majorité d'analytes à analyser (3, 10) de façon concomitante sont disposées sur une majorité de bandes de test disposées, côte-à-côte éventuellement de façon à pouvoir être séparables les unes des autres.

7. Procédé immunochromatographique selon l'une des revendications 1 à 6, **caractérisé en ce que** la membrane immunochromatographique (6) est immergée 2 à 15 minutes dans la solution test (2) à analyser.
